# EUROPEAN PATENT APPLICATION

(11) **EP 1 972 671 A1**
(43) Date of publication of application: **24.09.2008**
(21) Application number: 08004509.9
(22) Date of filing: 11.03.2008
(51) Int. Cl.: C09D 127/16, C08K 5/17, C08K 5/20

(54) **Fluororubber coating material**

(30) Priority: 22.03.2007 JP 2007075074
(71) Applicant: TOKAI RUBBER INDUSTRIES, LTD., Komaki-shi, Aichi-ken, 485-8550 (JP)
(72) Inventor: Mizutani, Kouji, Komaki-shi Aichi-ken 485-8550 (JP); Katayama, Kazutaka, Komaki-shi Aichi-ken 485-8550 (JP)
(74) Representative: Kuhnen & Wacker

(57) **Abstract**

A rubber coating material contains:
(A) a ternary fluororubber;
(B) an amine vulcanizing agent; and
(C) an amide compound.

## Description

### BACKGROUND OF THE INVENTION

### 1. Field of the Invention

The present invention relates to rubber coating materials for use as sealing members, and specifically to rubber coating materials for joining pipes and hoses together.

### 2. Description of the Related Art

An example of a rubber coating material is proposed in Japanese Patent No. 2730154 (Patent Document 1). This coating material contains a fluororubber (binary fluororubber) and an amine vulcanizing agent and is applied to a metal surface to provide a fluororubber-coated metal plate used as, for example, a heat-resistant gasket.

This rubber coating material, however, has the drawback of showing low storage stability because a vulcanization reaction of the amine vulcanizing agent proceeds at room temperature and increases the viscosity of the rubber coating material (rubber cement). Hence, the rubber coating material must be refrigerated for storage, and care is also required after the seal is broken. In addition, attention is being focused on the addition of carbon-neutral, biomass-derived alcohols to fuels such as gasolines to reduce emission of carbon dioxide, a greenhouse gas. Adding the alcohols, however, can vary the polarity of gasolines and therefore cause problems with resistance to such gasolines for conventionally used binary fluororubbers disclosed in, for example, Patent Document 1. Thus, further improvements are demanded in terms of resistance to alcohol-mixed fuel oil (alcohol-mixed fuel oil volume swelling properties).

### SUMMARY OF THE INVENTION

An object of the present invention, which has been made under the above circumstances, is to provide a rubber coating material having high film strength, high storage stability, and high resistance to alcohol-mixed fuel oil.

To achieve the above object, a rubber coating material according to the present invention contains the following component (A) in combination with the following components (B) and (C):
(A) a ternary fluororubber;
(B) an amine vulcanizing agent; and
(C) an amide compound.

The inventors have made a series of intensive studies to achieve a rubber coating material having high film strength, high storage stability, and high resistance to alcohol-mixed fuel oil. The inventors have continued experimentation, focusing on amide compounds, which react less easily at room temperature and have higher storage stability than amine vulcanizing agents. As a result, the inventors have found that although reducing the amount of amine vulcanizing agent to improve storage stability degrades vulcanization properties, the complementary use of the amide compound provides high film strength and high storage stability, thus achieving the present invention. Referring to the reaction formulas (1) to (3) below, vulcanization of the ternary fluororubber with the amine vulcanizing agent produces hydrogen fluoride (HF) (reaction formula (1)). An acid acceptor (such as magnesium oxide) then accepts the hydrogen fluoride (HF) to produce water as a byproduct (reaction formula (2)). The water thus produced triggers a hydrolysis reaction of the amide compound, in which some bonds (amide bonds) are broken to produce a diamine compound (reaction formula (3)). The diamine compound serves as an alternative to the amine vulcanizing agent so that the vulcanization proceeds, thus improving film strength. The hydrolysis reaction of the amide compound, occurring less easily at room temperature, provides higher storage stability than when using the amine vulcanizing agent alone. Thus, the rubber coating material can achieve both high film strength and high storage stability because the storage stability can be improved by reducing the amount of amine vulcanizing agent while compensating for the decrease in film strength due to the reduction in the amount of amine vulcanizing agent by the complementary use of the amide compound. In addition, the rubber coating material has high resistance to alcohol-mixed fuel oil because the ternary fluororubber is used instead of a binary fluororubber.

-(2F)x-(4F)y-(6F)z (ternary fluororubber) + H₂N-R¹-NH₂ (amine vulcanizing agent) → HF (hydrogen fluoride) (1)

2HF + MgO (acid acceptor) → MgF₂ + H₂O (2)

R-CONH-R²-NHCO-R (amide compound) + 2H₂O → 2RCOOH + H₂N-R²-NH₂ (diamine compound) (3)

(where each R is an alkyl group that may be the same or different; and R¹ and R² are bivalent organic groups)

Thus, the rubber coating material according to the present invention, containing the ternary fluororubber in combination with the amine vulcanizing agent and the amide compound, can achieve both high film strength and high storage stability, and also has high resistance to alcohol-mixed fuel oil because the ternary fluororubber is used instead of a binary fluororubber.

In addition, a better balance between film strength and storage stability can be achieved if the weight mixing ratio of the amine vulcanizing agent to the amide compound falls within a predetermined range.

In addition, the storage stability can be further improved if the content of the amine vulcanizing agent falls within a predetermined range.

In addition, the film strength can be further improved if the content of the amide compound falls within a predetermined range.

In addition, the film strength can be further improved if the amide compound is a fatty acid bisamide.

The rubber coating material according to the present invention can be used as a rubber coating material (rubber cement) for joining pipes and hoses together and is particularly suitable as a sealing member for fuel piping systems compatible with flexible fuel vehicles (FFVs).

### BRIEF DESCRIPTION OF THE DRAWING

The sole figure of the drawing is a schematic diagram of a joint structure of a pipe and a hose with a rubber coating material according to the present invention.

### DESCRIPTION OF THE PREFERRED EMBODIMENTS

Next, an embodiment of the present invention will be described.

A rubber coating material according to the present invention can be achieved with a ternary fluororubber (component A), an amine vulcanizing agent (component B), and an amide compound (component C).

The ternary fluororubber (component A) used is, for example, a vinylidene fluoride-hexafluoropropylene-tetrafluoroethylene rubber. This ternary fluororubber (component A), having high resistance to alcohol-mixed fuel oil, is suitable as a coating material for hoses to be used with gasolines having high alcohol concentrations.

Examples of the amine vulcanizing agent (component B) used in combination with the ternary fluororubber (component A) include N,N'-dicinnamylidene-1,6-hexanediamine, 1,6-hexanediamine, triethylenetetramine, tetraethylenepentamine, triethylenediamine, hexamethylenediamine carbamate (N⁺H₃(CH₂)₆NHCOO⁻), ethylenediamine carbamate, alicyclic amine salts, amidinothiourea, dihydrazide isophthalate, dihydrazide adipate, dihydrazide sebacate, dihydrazide dodecanedioate, 3,3'-dimethyl-4,4'-diaminobiphenyl, 2,2'-dimethyl-4,4'-diaminobiphenyl dihydrochloride, 3,3'-dimethyl-4,4'-diaminobiphenyl-6,6'-sulfonic acid, 2,2',5,5'-tetrachloro-4,4'-diaminobiphenyl, 4,4'-methylene-bis(2-chloroaniline), 4,4'-diaminodiphenyl ether, 1,3'-bis(4-aminophenoxy)benzene, 3,4'-diaminodiphenyl ether, 2,2-bis(4-(4-aminophenoxy)phenyl)propane, and 4,4'-diaminodiphenylsulfone. These compounds may be used alone or in combination of two or more of them. Among them, N,N'-dicinnamylidene-1,6-hexanediamine is preferred in terms of the balance between film strength and storage stability.

The content of the amine vulcanizing agent (component B) is preferably 0.5 to 2.5 parts by weight (hereinafter abbreviated to "parts"), particularly preferably 1 to 2 parts, based on 100 parts of the ternary fluororubber (component A). If the content of the amine vulcanizing agent (component B) is excessively low, it produces less water for triggering the hydrolysis of the amide compound (component C); in this case, the rubber coating material tends to show poor vulcanization properties. Conversely, if the amount of the amine vulcanizing agent (component B) is excessively high, the rubber coating material tends to show low storage stability.

The amide compound (component C) used in combination with the ternary fluororubber (component A) and the amine vulcanizing agent (component B) is preferably one having two or more amide groups (-CONH-), particularly preferably a bisamide which has two amide groups. The term "amide" refers to an acid amide (R-CONH-).

An example of the amide compound (component C) is represented by the following general formula (4):

R-CONH-R²-NHCO-R (4)

(where each R is an alkyl group that may be the same or different; and R² is a bivalent organic group)

In the general formula (4) above, the bivalent organic group, R², is not particularly limited and is preferably an alkylene group having 2 to 18 carbon atoms, particularly preferably an alkylene group having 2 to 6 carbon atoms. Examples of the bivalent organic group, R², include dimethylene, trimethylene, tetramethylene, pentamethylene, hexamethylene, heptamethylene, octamethylene, nonamethylene, decamethylene, undecamethylene, dodecamethylene, tridecamethylene, tetradecamethylene, pentadecamethylene, hexadecamethylene, heptadecamethylene, and octadecamethylene groups.

In the general formula (4) above, the alkyl groups, R, are not particularly limited and are preferably alkyl groups having 2 to 21 carbon atoms, particularly preferably alkyl groups having 10 to 21 carbon atoms.

Examples of the amide compound (component C) include bisamides of fatty acids such as acetic acid, propionic acid, butyric acid, valeric acid, caproic acid, enanthic acid, caprylic acid, pelargonic acid, capric acid, lauric acid, myristic acid, pentadecanoic acid, palmitic acid, margaric acid, and stearic acid, specifically, fatty acid bisamides such as ethylene-bis-capramide, ethylene-bis-stearamide, and hexamethylene-bis-stearamide. These compounds may be used alone or in combination of two or more of them.

The content of the amide compound (component C) is preferably 0.5 to 8 parts, particularly preferably 1 to 2 parts, based on 100 parts of the ternary fluororubber (component A). If the content of the amide compound (component C) is excessively low, it shows a less vulcanization effect. Conversely, if the amount of the amide compound (component C) is excessively high, the rubber coating material tends to show poor vulcanization properties.

In the present invention, the weight mixing ratio of the amine vulcanizing agent (component B) to the amide compound (component C) is preferably represented as component B/component C = 5/1 to 1/16, particularly preferably component B/component C = 2/1 to 1/2. If the weight mixing ratio is excessively low (the content of the component B is low and that of the component C is high), the rubber coating material tends to show poor vulcanization properties. Conversely, if the weight mixing ratio is excessively high (the content of the component B is high and that of the component C is low), the rubber coating material tends to show low storage stability.

In addition to the above components A to C, the rubber coating material according to the present invention may contain, for example, an acid acceptor, carbon black, an antiaging agent, an ultraviolet protective agent, an adhesion promoter, a white filler, a pigment, and a plasticizer.

Examples of the acid acceptor include magnesium oxide, magnesium hydroxide, barium hydroxide, magnesium carbonate, barium carbonate, calcium oxide (quicklime), calcium hydroxide (slaked lime), calcium carbonate, calcium silicate, calcium stearate, calcium phthalate, magnesium phosphite, calcium phosphite, and zinc oxide (zinc white).

The content of the acid acceptor is preferably 5 to 40 parts, particularly preferably 10 to 30 parts, based on 100 parts of the ternary fluororubber (component A)-.

In addition, the content of carbon black is preferably 5 to 80 parts, particularly preferably 10 to 60 parts, based on 100 parts of the ternary fluororubber (component A).

The rubber coating material according to the present invention can be prepared by, for example, mixing the ternary fluororubber (component A), the amine vulcanizing agent (component B), the amide compound (component C), and optionally other additives such as the acid acceptor and carbon black, and kneading the mixture with a kneader such as a roller or a mixer.

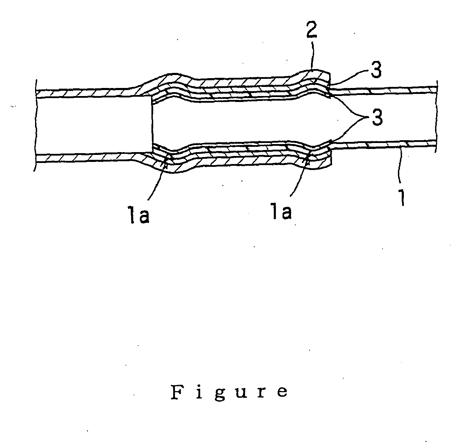

The rubber coating material according to the present invention can be used as a rubber coating material for joining pipes and hoses together and is suitable as a rubber coating material for FFV-compatible fuel piping systems. Referring to Fig. 1, for example, an end of a cylindrical pipe 1 having two annular bumps 1a on its circumferential surface is dipped in the rubber coating material according to the present invention to form a rubber coating layer (bonding layer) 3 of the rubber coating material on the circumferential surface of the end of the pipe 1. The pipe 1 is inserted into a hose 2 and is subjected to a heat treatment (for example, at 140°C to 250°C for 5 to 30 minutes) where the amide compound (component C) is hydrolyzed to produce a diamine compound. This diamine compound serves as an amine vulcanizing agent so that the vulcanization proceeds, thus improving the film strength (vulcanization properties) of the coating layer 3. Thus, the pipe 1 and the hose 2 are joined together.

The material of the pipe 1 is not particularly limited, and it may be formed of, for example, a metal such as SUS (stainless steel), aluminum, or iron, or a resin such as polyamide resin or fluororesin, and is preferably plated. In particular, a SUS pipe 1 is typically used for an FFV-compatible fuel piping system.

The rubber coating layer 3 is generally formed to have a thickness of 1 to 100 µm.

### Examples

Next, examples of the present invention will be described in conjunction with comparative examples, although the invention is not limited to the examples.

### Examples 1 to 3 and Comparative Examples 1 to 6

The components shown in Tables 1 and 2 were mixed in the proportions shown and were kneaded with a roller to prepare rubber coating materials.

**Table 1**

| (parts by weight) | | | | |
|---|---|---|---|---|
| | | Examples | | |
| | | 1 | 2 | 3 |
| Ternary fluororubber | | 100 | 100 | 100 |
| Binary fluororubber | | - | - | - |
| Acid acceptor (magnesium oxide) | | 20 | 20 | 20 |
| Carbon black | | 15 | 15 | 15 |
| Amine vulcanizing agent | | 2 | 0.5 | 2.5 |
| Amide compound | | 4 | 8 | 0.5 |
| Pipe insertion properties | | Good | Good | Good |
| Vulcanization properties | Evaluation | Good | Good | Good |
| | Maximum torque - minimum torque (N·m) | 0.65 | 0.6 | 0.61 |
| Storage stability | | Good | Good | Good |
| Resistance to alcohol-mixed fuel oil | | Good | Good | Good |

**Table 2**

| (parts by weight) | | | | | | | |
|---|---|---|---|---|---|---|---|
| | | Comparative examples | | | | | |
| | | 1 | 2 | 3 | 4 | 5 | 6 |
| Ternary fluororubber | | 100 | 100 | 100 | - | - | 100 |
| Binary fluororubber | | - | - | - | 100 | 100 | - |
| Acid acceptor (magnesium oxide) | | 20 | 20 | 20 | 20 | 20 | 20 |
| Carbon black | | 15 | 15 | 15 | 15 | 15 | 15 |
| Amine vulcanizing agent | | 3 | 0.5 | - | 3 | 2 | - |
| Amide compound | | - | - | 3 | - | 4 | - |
| Quaternary phosphonium salt vulcanizing agent | | - | - | - | - | - | 2 |
| Polyol vulcanizing agent | | - | - | - | - | - | 4 |
| Pipe insertion properties | | Good | Poor | Poor | Good | Good | Poor |
| Vulcanization properties | Evaluation | Good | Poor | Poor | Good | Good | Poor |
| | Maximum torque - (N·m) minimum torque (N·m) | 0.74 | 0.1 | 0.002 | 0.72 | 0.62 | 0.02 |
| Storage stability | | Poor | Good | Good | Fair | Good | Good |
| Resistance to alcohol-mixed fuel oil | | Good | - | - | Poor | Poor | Good |

The types of materials shown in Tables 1 and 2 are as follows:

### Ternary fluororubber (component A)

Vinylidene fluoride-hexafluoropropylene-tetrafluoroethylene rubber (VITON B50, manufactured by E.I. du Pont de Nemours and Company)

### Binary fluororubber

Vinylidene fluoride-hexafluoropropylene rubber (VITON A, manufactured by E.I. du Pont de Nemours and Company)

### Amine vulcanizing agent (component B)

N,N'-dicinnamylidene-1,6-hexanediamine (DIAK No. 3, manufactured by E.I. du Pont de Nemours and Company)

### Amide compound (component C)

Ethylene-bis-capramide (SLIPAX C-10, manufactured by Nippon Kasei Chemical Co., Ltd.)

### Carbon Black

MT carbon black (THERMAX N990, manufactured by Engineered Carbons Inc.)

### Acid acceptor

Magnesium oxide (KYOWA MAG #150, manufactured by Kyowa Chemical Industry Co., Ltd.)

### Quaternary phosphonium salt vulcanizing agent

Quaternary phosphonium salt (CURATIVE 20, manufactured by E.I. du Pont de Nemours and Company)

### Polyol vulcanizing agent

Bisphenol AF (CURATIVE 30, manufactured by E.I. du Pont de Nemours and Company)

The rubber coating materials of the examples and the comparative examples, thus prepared, were evaluated for individual properties according to the following criteria. The results are shown in Tables 1 and 2 above.

### Pipe insertion properties

Each rubber coating material was dissolved in methyl ethyl ketone in an amount of 20% to 30% by weight to prepare a rubber cement whose viscosity was adjusted with toluene. A SUS pipe (having an inner diameter of 6 mm and an outer diameter of 8 mm and including two annular bumps with a diameter of 8.8 mm) was subjected to a primer treatment with a phenolic adhesive (METALOC PA, manufactured by Toyo Kagaku Kenkyusho K.K.), was dipped in the rubber cement, and was heated at 160°C for 45 minutes to prepare a coating sample. Next, each pipe was squeezed into a resin tube (having an inner diameter of 6 mm and an outer diameter of 8 mm) composed of a single layer of Nylon 11 before the squeezed portion was cut in half to visually check the coating on the pipe for peeling. The pipe was evaluated as "Good" if the coating was not peeling and as "Poor" if the coating was peeling and showed the underlying metal surface (SUS pipe).

### Vulcanization properties (coating strength)

Each rubber coating material was evaluated for vulcanization properties by a rheometer test (at 160°C for 30 minutes), based on the difference between the finally reached torque (maximum torque) and the minimum torque. The rubber coating material was evaluated as "Good" if the difference between the maximum torque and the minimum torque was 0.5 N·m or more and as "Poor" if the difference between the maximum torque and the minimum torque was less than 0.5 N·m. The rheometer test is a test providing a measure of vulcanization.

### Storage stability

Each rubber coating material was dissolved in methyl ethyl ketone solvent in an amount of 20% to 30% by weight to prepare a rubber cement whose viscosity was adjusted with toluene. The rubber cement was evaluated for storage stability by being left at room temperature (25°C) for 800 hours according to JIS (Japanese Industrial Standards) K5400. The rubber cement was evaluated as "Good" if no change in viscosity occurred, as "Fair" if the increase in viscosity was less than 100 mPa·s, and as "Poor" if the increase in viscosity was 100 mPa·s or more.
Resistance to alcohol-mixed fuel oil (alcohol-mixed fuel oil volume swelling properties).

Each rubber coating material was dipped in FC/M15 fuel oil at 40°C for 48 hours according to JIS K6258. The rubber coating material was evaluated as "Good" if the swelling rate with respect to the initial volume was +30% or less and as "Poor" if the swelling rate with respect to the initial volume was more than +30%. The alcohol-mixed fuel oil volume swelling properties are a measure for evaluation of resistance to alcohol-mixed fuel oil.

The results of Tables 1 and 2 demonstrate that the rubber coating materials of Examples 1 to 3 all excelled in pipe insertion properties, vulcanization properties (coating strength), storage stability, and resistance to alcohol-mixed fuel oil.

In contrast, the rubber coating material of Comparative Example 1, containing the amine vulcanizing agent but no amide compound, had low storage stability. The rubber coating material of Comparative Example 2 had higher storage stability but lower coating strength because it contained a smaller amount of amine vulcanizing agent than the rubber coating material of Comparative Example 1. The rubber coating material of Comparative Example 3, containing the amide compound but no amine vulcanizing agent, had low coating strength because it produced no water for triggering the hydrolysis of the amide compound.- The rubber coating material of Comparative Example 4, containing the binary fluororubber instead of the ternary fluororubber, had low resistance to alcohol-mixed fuel oil. The rubber coating material of Comparative Example 5, containing both the amine vulcanizing agent and the amide compound but containing the binary fluororubber instead of the ternary fluororubber, had low resistance to alcohol-mixed fuel oil. The rubber coating material of Comparative Example 6, containing the polyol vulcanizing agent instead of the amine vulcanizing agent, had low coating strength due to insufficient vulcanization because the polyol vulcanizing agent had a lower vulcanization rate than the amine vulcanizing agent.

## Claims

1. A rubber coating material comprising:
(A) a ternary fluororubber;
(B) an amine vulcanizing agent; and
(C) an amide compound.

2. The rubber coating material according to Claim 1, wherein the weight mixing ratio of the component (B) to the component (C) is represented as component (B)/component (C) = 5/1 to 1/16.

3. The rubber coating material according to Claim 1 or 2, wherein the content of the component (B) is 0.5 to 2.5 parts by weight based on 100 parts by weight of the component (A).

4. The rubber coating material according to one of Claims 1 to 3, wherein the content of the component (C) is 0.5 to 8 parts by weight based on 100 parts by weight of the component (A).

5. The rubber coating material according to one of Claims 1 to 4, wherein the amide compound used as the component (C) is a fatty acid bisamide.

6. The rubber coating material according to one of Claims 1 to 5, further comprising one of a metal oxide and a metal hydroxide.
